# EUROPEAN PATENT SPECIFICATION

(11) **EP 1 832 169 B1**
(45) Date of publication and mention of the grant of the patent: **13.03.2013**
(21) Application number: 07102894.8
(22) Date of filing: 22.02.2007
(51) Int. Cl.: A01N 59/16, A01N 25/08, A01N 25/10, A01P 1/00

(54) **Antimicrobial zeolite and antimicrobial composItion**
Antimikrobieller Zeolith und antimikrobielle Zusammensetzung
Zéolite antimicrobienne et composition antimicrobienne

(30) Priority: 22.02.2006 JP 2006045241
(43) Date of publication of application: 12.09.2007
(73) Proprietor: Sinanen Zeomic Co., Ltd., Nagoya-shi, Aichi (JP)
(72) Inventor: Kurihara, Yasuo c/o Sinanen Zeomic Co., Ltd., Nagoya-shi, Aichi 455-0051 (JP); Miyake, Kumiko c/o Sinanen Zeomic Co., Ltd., Nagoya-shi, Aichi 455-0051 (JP); Uchida, Masashi c/o Sinanen Zeomic Co., Ltd., Nagoya-shi, Aichi 455-0051 (JP)
(74) Representative: Hubert, Philippe

(56) References cited:
- EP-A1- 1 190 622
- EP-A2- 0 270 129
- DATABASE CA [Online] CHEMICAL ABSTRACTS SERVICE, COLUMBUS, OHIO, US; XP002666707, retrieved from STN-International accession no. 134:1593 & CN 1 253 729 A (CHINESE ACAD INST CHEMISTRY [CN]) 24 May 2000 (2000-05-24)
- DATABASE WPI Week 199539 Thomson Scientific, London, GB; AN 1995-299690 XP002666708, & JP 7 196869 A (MITSUBISHI GAS CHEM CO INC) 1 August 1995 (1995-08-01) -& DATABASE EPODOC [Online] EUROPEAN PATENT OFFICE, THE HAGUE, NL; XP002666709, & JP 7 196869 A (MITSUBISHI GAS CHEMICAL CO) 1 August 1995 (1995-08-01) -& DATABASE CA [Online] CHEMICAL ABSTRACTS SERVICE, COLUMBUS, OHIO, US; XP002666710, retrieved from STN-International accession no. 124:31215
- DATABASE WPI Week 199831 Thomson Scientific, London, GB; AN 1998-357672 XP002666711, & JP 10 140012 A (SHINAGAWA NENRYO KK) 26 May 1998 (1998-05-26)
- DATABASE EPODOC [Online] EUROPEAN PATENT OFFICE, THE HAGUE, NL; XP002666712, & JP 3 215565 A (KANEBO KASEI KK) 20 September 1991 (1991-09-20) -& DATABASE WPI Week 199144 Thomson Scientific, London, GB; AN 1991-321683 XP002666713, -& JP 3 215565 A (KANEBO KASEI KK) 20 September 1991 (1991-09-20)
- DATABASE WPI Week 199047 Thomson Scientific, London, GB; AN 1990-352939 XP002666714, & JP 2 255844 A (DAINIPPON INK & CHEM KK) 16 October 1990 (1990-10-16)

## Description

### Technical Field

The present invention relates to antimicrobial zeolite and an antimicrobial composition containing the antimicrobial zeolite and, more specifically, to antimicrobial zeolite and an antimicrobial composition, in particular, an antimicrobial resin composition, which hardly undergo any color change with the elapse of time over a long period of time.

### Background Art

There have been well-known antimicrobial zeolite prepared by replacing ion-exchangeable metal ions of zeolite with antimicrobial metal ions such as silver, copper and/or zinc ions and an antimicrobial composition containing the same. In this respect, however, it has been known that an antimicrobial resin composition obtained by incorporating such antimicrobial zeolite into a resin undergoes a color change with the elapse of time. As a means for solving such a problem of color change, with time, associated with the conventional antimicrobial zeolite, there has already been developed a technique in which silver ions and ammonium ions are incorporated into zeolite (Japanese Un-Examined Patent Publication Sho 63-265809).

The antimicrobial zeolite disclosed in this article is certainly an excellent antimicrobial activity and, for instance, it is excellent in the durability of its antimicrobial action or power when it is left in air or in water and it hardly undergo any quality-deterioration even when it is incorporated into a resin through kneading. This antimicrobial zeolite is free of any extreme color change under the usual use conditions, but when it is exposed to severe conditions, for instance, it is irradiated with intensive ultraviolet rays over a long period of time, the zeolite suffers from a problem in that it undergoes a color change with the elapse of time. Although the zeolite per se does not lose its antimicrobial action due to these color changes, a good to which the antimicrobial zeolite is added may undergo a color change. This in turn results in the deterioration of the commercial value of the good depending on the kind thereof.

JP-A-10140012 discloses antimicrobial resin compositions, comprising silver containing inorganic powders, in which the compositions are stabilized against colour change by white pigments.

JP-A-3215565 discloses antibacterial resins having persistent whiteness, comprising metal zeolites and ZnO pigments.

### Disclosure of the Invention

### Problems to be solved by the invention

Accordingly, it is an object of the present invention to provide antimicrobial zeolite which hardly causes any color change with the elapse of time even when it is incorporated into a resin to give an antimicrobial resin composition.

It is another object of the present invention to provide an antimicrobial composition, in particular, an antimicrobial resin composition, which comprises the foregoing antimicrobial zeolite.

### Means for Solving the Problems

The present invention thus herein provides the following:
1. Antimicrobial zeolite comprising zeolite wherein a hardly soluble zinc salt, having a water solubility of 5% by weight or less at 20°C, is formed within fine pores present therein.
2. The antimicrobial zeolite as set forth in the foregoing item 1, wherein the hardly soluble zinc salt formed within the fine pores is zinc oxide, zinc oxalate or zinc citrate.
3. An antimicrobial composition comprising the foregoing antimicrobial zeolite as set forth in the foregoing item 1 or 2 in an amount ranging from 0.05 to 80% by mass.
4. The antimicrobial composition as set forth in the foregoing item 3, wherein it is an antimicrobial resin composition.
5. An antimicrobial resin composition comprising a resin and an antimicrobial zeolite as set forth in the foregoing items 1 or 2.
6. The antimicrobial resin composition as set forth in the foregoing item 5, wherein said resin is selected from the group consisting of thermoplastic and heat-curable resins such as polyethylenes, polypropylenes, vinyl chloride resins, ABS resins, polyesters, polyvinylidene chlorides, polyamides, polystyrenes, polyacetals, polyvinyl alcohols, polycarbonates, acrylic resins, polyurethanes, phenolic resins, urea resins, melamine resins, epoxy resins, fluoro-plastics, rayons, cuprammonium rayons, acetate resins, various kinds of elastomers, and naturally occurring and synthetic rubber materials.
7. The antimicrobial resin composition as set forth in the foregoing items 5 or 6, wherein said zeolite is present with a content from 0,1 to 3% by mass.
8. A process for the preparation of an antimicrobial resin composition as set forth in the foregoing items 5 to 7 by incorporating the antimicrobial zeolite into the resin.
9. A process for the preparation of an antimicrobial resin composition as set forth in the foregoing items 5 to 7 by coating the surface of a resin film with the antimicrobial zeolite.
10. Use of an antimicrobial zeolite as set forth in the foregoing items 1 or 2, for the prevention of a color change of an antimicrobial resin composition.

### Effects of the Invention

The antimicrobial zeolite according to the present invention can widely be applied, without causing any color change, even to the goods which undergo color changes with the elapse of time when the conventional antimicrobial zeolite is added.

### Best Mode for Carrying Out the Invention

The present invention will hereunder be described in more detail.

The "zeolite" usable in the present invention may be either naturally occurring one or synthetic one. The zeolite is in general an aluminosilicate having a three-dimensional skeletal structure and is represented by the following general formula: xM_{2/n}O· Al₂O₃· ySiO₂· zH₂O. In this general formula, M represents an ion-exchangeable n-valent ion and it is usually a mono-valent or di-valent metal ion; x represents the molar number of the metal oxide; y represents the molar number of the silica; and z represents the molar number of the water of crystallization.

Specific examples of zeolite materials are zeolite A, zeolite X, zeolite Y, zeolite T, zeolite having a high silica content, sodalite, mordenite, analcime, clinoptilolite, chabazite, and erionite, but the present invention is not restricted to these specific zeolite materials at all.

The ion-exchange capacities of these exemplified zeolite materials are typically 7 meq/g for the zeolite A, 6.4 meq/g for the zeolite X, 5 meq/g for the zeolite Y, 3.4 meq/g for the zeolite T, 11.5 meq/g for the sodalite, 2.6 meq/g for the mordenite, 5 meq/g for the analcime, 2.6 meq/g for the clinoptilolite, 5 meq/g for the chabazite, and 3.8 meq/g for the erionite.

The antimicrobial zeolite according to the present invention is one obtained by completely or partially replacing the ion-exchangeable ions present in the foregoing zeolite material such as sodium ions, calcium ions, potassium ions, magnesium ions, and/or iron ions, with antimicrobial metal ions such as silver ions. The antimicrobial zeolite according to the present invention preferably comprises silver ions and it may further comprise other antimicrobial metal ions in addition to silver ions. Examples of such other antimicrobial metal ions include ions of copper, zinc, mercury, lead, tin, bismuth, cadmium, chromium or thallium, with copper or zinc ions being preferably used herein.

The foregoing silver ions and antimicrobial other metal ions are desirably included in the zeolite in an amount ranging from 0.1 to 15% by mass from the viewpoint of the antimicrobial action thereof. More preferably used herein are antimicrobial zeolite materials each having a silver ion content ranging from 0.1 to 15% by mass and a copper ion or zinc ion content ranging from 0.1 to 8% by mass. In this specification, the term "% by mass" means that on the basis of the mass of the zeolite dried at a temperature of 110°C.

The antimicrobial zeolite of the present invention is a zeolite material in which a hardly soluble zinc salt is formed within fine pores present therein.

The "hardly soluble zinc salts" have water solubility of 5% by weight or less at 20°C. That is, the amount of the zinc salts in the aqueous saturated solution is 5 g or less based on 100 g of the saturated solution at 20°C. The zinc salts exemplified in the text have solubility of 0.05 to 5% by weight.

Examples of such hardly soluble zinc salts include zinc oxide, zinc peroxide, zinc hydroxide, zinc phosphate, zinc diphosphate, zinc carbonate, zinc oxalate, zinc citrate, zinc fluoride, zinc sulfide, zinc sulfite, zinc selenide, zinc cyanide, and zinc silicate, but preferably used herein are, for instance, zinc oxide, zinc oxalate, and zinc citrate since they can easily be produced. The amount of the hardly soluble zinc salt to be formed within the fine pores is preferably not less than 0.3% by mass and more preferably not less than 0.8% by mass on the basis of the total mass of the antimicrobial zeolite of the present invention, for the purpose of inhibiting the occurrence of any color change with time. Regarding the upper limit thereof, it is not more than 20% by mass and preferably not more than 15% by mass.

The "fine pores" means pores having a diameter of about 0.2 to about 3.0 nanometers.

Next, the method for the preparation of the antimicrobial zeolite of the present invention will be described in detail below.

As examples of methods for the preparation of the antimicrobial zeolite of the present invention, there can be listed, for instance, one which comprises the step of mixing a solution containing anions capable of chemically reacting with zinc ions and dissolved therein, with a mixture containing an aqueous solution containing zinc ions and an aqueous dispersion of antimicrobial zeolite.

For instance, zeolite is first brought into close contact with a previously prepared mixed aqueous solution containing silver ions and other antimicrobial metal ions so that ion-exchangeable ions present in the zeolite are replaced with the foregoing ions. The zeolite can be brought into contact with the mixed solution in a continuous or batch-wise manner at a temperature ranging from 10 to 70°C, preferably 40 to 60°C for 3 to 24 hours, preferably 10 to 24 hours. At this stage, the pH value of the foregoing aqueous mixed solution is suitably adjusted to a level ranging from 3 to 10 and preferably 5 to 7. Such adjustment of the pH value of the mixed solution would conveniently permit the prevention of any separation of, for instance, silver oxide on the surface of the zeolite and/or the interior of fine pores thereof.

Respective ions present in the mixed aqueous solution are in general supplied in the form of the corresponding salts thereof. Examples of such salts usable herein include silver nitrate, silver sulfate, silver perchlorate, silver acetate, diammine silver nitrate and diammine silver sulfate for silver ions; copper nitrate, copper sulfate, copper perchlorate, copper acetate and potassium tetracyano-cuprate for copper ions; zinc nitrate, zinc sulfate, zinc perchlorate, zinc acetate, zinc thiocyanate for zinc ions; mercury nitrate, mercury perchlorate and mercury acetate for mercury ions; tin sulfate for tin ions; lead sulfate and lead nitrate for lead ions; bismuth chloride and bismuth iodide for bismuth ions; cadmium perchlorate, cadmium sulfate, cadmium nitrate and cadmium acetate for cadmium ions; chromium perchlorate, chromium sulfate, chromium ammonium sulfate and chromium acetate for chromium ions; and thallium perchlorate, thallium sulfate, thallium nitrate and thallium acetate for thallium ions.

After the completion of the ion-exchange of the ion-exchangeable ions of the zeolite with these antimicrobial metal ions and the subsequent washing of the zeolite with water, a hardly soluble zinc salt is formed within fine pores of the zeolite. Examples of compounds each containing anionic ions capable of undergoing a chemical reaction with zinc ions to thus give a hardly soluble zinc salt include hydrogen peroxide for the formation of zinc oxide; hydrogen peroxide for the formation of zinc peroxide; aqueous ammonia, sodium hydroxide, potassium hydroxide and calcium hydroxide for the formation of zinc hydroxide; sodium phosphate, sodium hydrogen phosphate and ammonium phosphate for the formation of zinc phosphate; sodium diphosphate and ammonium diphosphate for the formation of zinc diphosphate; sodium carbonate and ammonium carbonate for the formation of zinc carbonate; oxalic acid and ammonium oxalate for the formation of zinc oxalate; citric acid, sodium citrate and ammonium citrate for the formation of zinc citrate; ammonium fluoride for the formation of zinc fluoride; aqueous hydrogen sulfide, sodium sulfide and ammonium sulfide for the formation of zinc sulfide; sodium sulfite for the formation of zinc sulfite; selenic acid for the formation of zinc selenide; ammonium cyanide for the formation of zinc cyanide; and sodium silicate for the formation of zinc silicate.

The zeolite obtained after the completion of the hardly soluble zinc salt-forming reaction is sufficiently washed with water and then dried. The water-washed zeolite is preferably dried under ordinary pressure and at a temperature ranging from 105 to 115°C, or under a reduced pressure ranging from 1 to 30 Torr and at a temperature ranging from 70 to 90°C.

The antimicrobial action of the antimicrobial zeolite of the present invention thus obtained can be evaluated by the determination of the minimum growth-inhibitory concentration (MIC) thereof against a variety of normal bacteria, fungi and yeast. A test for the determination of MIC comprises the steps of, for instance, smearing a solution for the inoculation of a bacterium onto the surface of a plate culture medium containing each candidate antimicrobial zeolite in an arbitrary concentration, cultivating the inoculated medium at 35°C for 24 hours for each bacterium; at 25°C for 4 days for fungi and yeast to thus determine the minimum concentration of the antimicrobial zeolite required for the inhibition of any growth of these microorganisms and each resulting minimum concentration is defined to be the MIC for each particular microorganism.

The present invention likewise provides an antimicrobial composition and, in particular, an antimicrobial resin composition, containing the foregoing antimicrobial zeolite. In this respect, examples of such resins usable herein include thermoplastic and heat-curable resins such as polyethylenes, polypropylenes, vinyl chloride resins, ABS (Acrylonitrile/Butadiene/Styrene copolymer) resins, polyesters, polyvinylidene chlorides, polyamides, polystyrenes, polyacetals, polyvinyl alcohols, polycarbonates, acrylic resins, polyurethanes, phenolic resins, urea resins, melamine resins, epoxy resins, fluoro-plastics, rayons, cuprammonium rayons, acetate resins, various kinds of elastomers, and naturally occurring and synthetic rubber materials.

The antimicrobial resin composition of the present invention can be, for instance, prepared by directly incorporating the foregoing antimicrobial zeolite into one of the foregoing resins or by coating the surface of, for instance, a resin film with the antimicrobial zeolite. The content of the antimicrobial zeolite in the antimicrobial resin composition desirably ranges from 0.05 to 80% by mass and preferably 0.1 to 80% by mass from the viewpoint of the impartment, to the resin, of antibacterial, antifungal and/or antialgal functions. In this connection, the MIC values of the antimicrobial resin composition can be evaluated according to the same method described above. In addition, the content of the antimicrobial zeolite in the antimicrobial resin composition preferably ranges from 0.1 to 3% by mass from the viewpoint of the prevention of any color change of the resin.

The foregoing antimicrobial zeolite and antimicrobial resin composition of the present invention can be used in a variety of fields.

For instance, in the field of aqueous systems, they can be used as antibacterial and/or antialgal agents used in, for instance, water purifiers or those for the water of cooling towers and a variety of cooling water.

In the field of the paints and varnishes, they can be used for imparting the antibacterial, antifungal and/or antialgal functions to the surface of a coated layer by, for instance, directly incorporating them into a variety of paints and varnishes such as oil-based ones, lacquers, varnishes, alkyl resin type ones, amino alkyd resin type ones, vinyl resin type ones, acrylic resin type ones, epoxy resin type ones, urethane resin type ones, aqueous emulsified resin type ones, powder coatings, chlorinated rubber coatings, and phenolic resin type ones, or by applying the zeolite or the resin composition onto the surface of a coated layer.

In the field of the construction, it is possible to impart the antibacterial, antifungal and/or antialgal functions to the surface of building materials such as jointing materials, wall materials and tiles by incorporating them into these building materials or by applying the same onto the surface of these building materials.

In the field of the paper-making or paper industry, it is possible to impart the antibacterial and/or antifungal functions to various paper materials such as wet tissues, paper packing materials, corrugated boards, sheets of paper for spreading and freshness-keeping paper by the incorporation of the zeolite or the resin composition into these paper materials during the process for the manufacture of the paper materials, or by applying the same onto the surface of these paper materials. Alternatively, it is also possible to use the zeolite or the resin composition, in particular, as a slime-controlling agent (an agent for inhibiting the generation of any slime).

The antimicrobial zeolite of the present invention can be applied to all of the fields which require the inhibition and/or prevention of the generation and growth of various microorganisms such as a variety of normal or common bacteria, fungi, yeast and algae, and/or the extinction thereof, in addition to the aforementioned fields.

### EXAMPLES

The present invention will be described in more detail with reference to the following Examples.

### Example (Preparation of Antimicrobial zeolite)

In this Example, there were used the following three kinds of zeolite materials: Zeolite A (Na₂O· Al₂O₃· 1.9SiO₂· xH₂O with x is 0 to 14, having an average particle size of 1.5µm); Zeolite X (Na₂O· Al₂O₃· 2.3SiO₂· xH₂O with x is 0 to 12, having an average particle size of 2.5µm); and Zeolite Y (Na₂O· Al₂O₃· 4SiO₂· xH₂O with x is 0 to 11, having an average particle size of 0.7µm). In addition, as salts for providing respective ions for the ion-exchange of these zeolite materials, there were used the following three kinds of salts: silver nitrate; zinc nitrate; and ammonium nitrate.

After the completion of the ion-exchange operations, each zeolite material was washed with water and then a hardly soluble zinc salt was formed within fine pores of each zeolite material using the following three kinds of compounds: hydrogen peroxide (in the form of an aqueous solution), ammonium oxalate and ammonium citrate to thus form samples (Nos. 1 to 5) of the antimicrobial zeolite products according to the present invention. Separately, the same procedures used above for preparing the sample No. 1 were repeated except for omitting the treatment with hydrogen peroxide (as an aqueous solution) to thus give a comparative sample No. 6 which was free of any hardly soluble zinc salt.

The following Table 1 shows the kinds of zeolite materials, the kinds and concentrations of salts contained in the mixed aqueous solution, and the kinds and concentrations of salts included in the aqueous solution of compounds for forming the hardly soluble zinc salt, which were used in the preparation of respective samples.

Each sample (1 kg of the powder thereof obtained by drying the sample by heating the same at 110°C) was dispersed in water to give 1.3 L of a slurry, followed by the degassing of the slurry with stirring and the addition of a proper amount of a 0.5N nitric acid aqueous solution and an additional amount of water to the slurry to thus control the pH value thereof to a level ranging from 5 to 7 and to thus give a slurry having a total volume of 1.8 L. Then 3 L of a mixed aqueous solution containing desired salts in desired concentrations was added thereto to thus give a slurry having a total volume of 4.8 L, for the purpose of the ion-exchange of the sample zeolite, the resulting slurry was maintained at a temperature ranging from 40 to 60°C and the slurry was held at its equilibrium state over 16 hours with stirring. After the completion of the ion-exchange treatment, the zeolite phase was filtered and the recovered zeolite phase was washed with warm water or water maintained at room temperature till the excess silver ions and zinc ions were completely removed from the zeolite phase. Subsequently, one liter of an aqueous solution of a compound for forming a hardly soluble zinc salt was admixed with the zeolite phase, the resulting slurry was maintained at a temperature ranging from 40 to 60°C and the slurry was maintained at its equilibrium state over 16 hours with stirring. After the completion of the reaction and the exchange, the zeolite phase was filtered and the recovered zeolite phase was washed with warm water or water maintained at room temperature till the excess compound was completely removed from the zeolite phase. Then the sample was dried by heating the same at 110°C.

The metal ion content of each resulting zeolite product was determined by the fluorescent X-ray analysis while the ammonium ion content thereof was determined by the absorption spectrophotometry using indophenol.

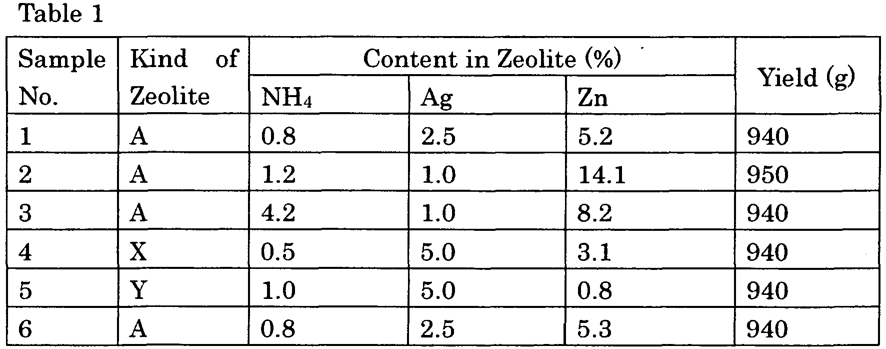

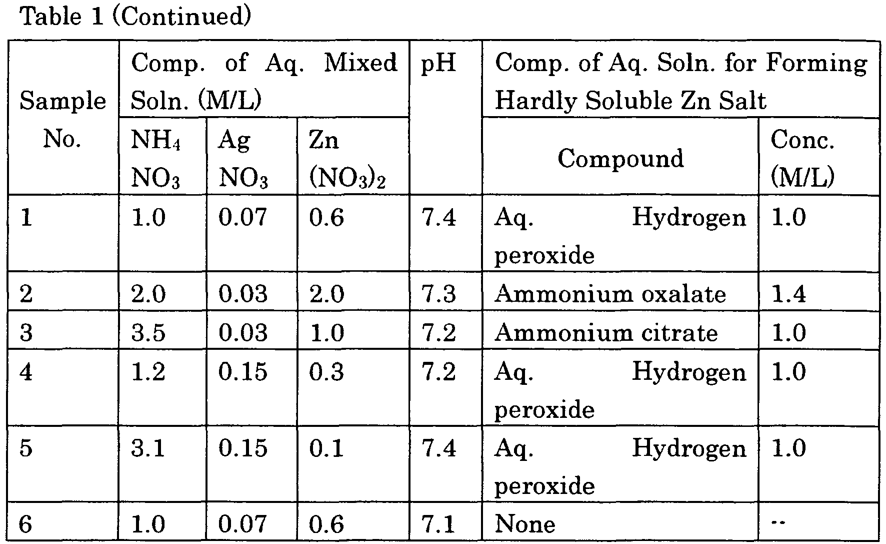

### Test Example 1 (Test for Examining Antifungal Activity)

The antimicrobial activities of the antimicrobial zeolite products obtained in Examples and Comparative Example were determined on the basis of the MIC against fungi. The results thus obtained are summarized in the following Table 2.

**Table 2**

| Sample No. | Aspergillus niger NBRC6341 | Fungi belonging to genus Penicillium NBRC6352 | Chaetomium NBRC6347 |
|---|---|---|---|
| 1 | 500 | 500 | 500 |
| 2 | 500 | 500 | 500 |
| 3 | 250 | 500 | 250 |
| 4 | 500 | 500 | 500 |
| 5 | 500 | 500 | 500 |
| 6 | 500 | 500 | 500 |

The data listed in Table 2 clearly indicate that all of the respective antimicrobial zeolite samples show excellent antifungal activities and the antifungal activities thereof are almost identical to one another.

### Test Example 2 (Test for Examining Antibacterial Activity)

The antimicrobial zeolite products obtained in Examples and Comparative Example were dried by heating, each of the zeolite products was then incorporated into a resin through kneading in an amount of 1% by mass and the resulting resin containing the zeolite was injection-molded into each corresponding sample of the antimicrobial resin composition. Each resulting sample was inspected for the antimicrobial activity with respect to the processed antimicrobial good according to JIS Z2801. In this test, there were used Escherichia coli and Staphylococcus aureus as the bacterial species for examining the antimicrobial activity. The following Table 3 shows the kinds of resins used for forming molded articles and the results obtained in the antimicrobial activity test.

### Test Example 3 (Test for Examining Color Change)

The antimicrobial zeolite products obtained in Examples and Comparative Example were dried by heating, each of the zeolite products was then incorporated into a resin through kneading in an amount of 1% by mass and the resulting resin containing the zeolite was injection-molded into each corresponding sample of the antimicrobial resin composition. Each resulting sample was inspected for any color change observed after the irradiation thereof with the light rays emitted from a black light of 100W for 100 hours and the color change was expressed in terms of the color difference ΔE between respective color values in the L*-a*-b* colorimetric system observed before and after the light-irradiation treatment. In this respect, each color value was determined for each sample placed on a white Kent paper using a colorimetric color difference meter available from Minolta Camera Co., Ltd. The following Table 3 likewise shows the kinds of resins used for forming molded articles and the results obtained in the color change test.

**Table 3**

| Sample No. | Kind of Resin Used | Results of Antimicrobial Activity Test (Values of Antimicrobial Activities) | | Color Change Test (color difference (ΔE) |
|---|---|---|---|---|
| | | Escherichia coli | Staphylococcus aureus | |
| 1 | PE, NUC8009 | 4.0 | 3.6 | 0.04 |
| 2 | PP, J707WT | 4.3 | 3.4 | 0.04 |
| 3 | ABS, Styrac 220 | 4.1 | 3.8 | 0.02 |
| 4 | PE, NUC8009 | 4.5 | 3.8 | 0.06 |
| 5 | PE, NUC8009 | 4.0 | 3.7 | 0.03 |
| 6 | PE, NUC8009 | 3.4 | 3.2 | 6.28 |

| | | | | |
|---|---|---|---|---|
| PE: NUC8009 (Trade name of a polyethylene produced by Nippon Unicar Co., Ltd.) PP: J707WT (Trade name of a polypropylene produced by Grand Polymer K.K.) ABS: Styrac 220 (The trade name of an ABS product available from Asahi Chemical Industry Co., Ltd.) | | | | |

The results listed in Table 3 clearly indicate that there is not observed any color change in the molded article (Sample Nos. 1 to 5) of each antimicrobial resin composition which comprises the antimicrobial zeolite of the present invention, which is prepared by forming hardly soluble zinc salt within fine pores of the zeolite using an aqueous hydrogen peroxide, ammonium oxalate or ammonium citrate.

Contrary to this, the comparative sample No. 6 which does not comprise hardly soluble zinc salt possesses an antimicrobial activity almost comparable to those observed for the sample Nos. 1 to 5, but distinct color change is observed for the comparative sample.

## Claims

1. Antimicrobial zeolite comprising zeolite wherein a hardly soluble zinc salt, having a water solubility of 5% by weight or less at 20°C, is formed within fine pores present therein.

2. The antimicrobial zeolite as set forth in claim 1, wherein the hardly soluble zinc salt formed within the fine pores is zinc oxide, zinc oxalate or zinc citrate.

3. An antimicrobial composition comprising the antimicrobial zeolite as set forth in claim 1 or 2 in an amount ranging from 0.05 to 80% by mass.

4. The antimicrobial composition as set forth in claim 3, wherein it is an antimicrobial resin composition.

5. An antimicrobial resin composition comprising a resin and an antimicrobial zeolite as claimed in any of claims 1 or 2.

6. The antimicrobial resin composition according to claim 5, wherein said resin is selected from the group consisting of thermoplastic and heat-curable resins such as polyethylenes, polypropylenes, vinyl chloride resins, ABS resins, polyesters, polyvinylidene chlorides, polyamides, polystyrenes, polyacetals, polyvinyl alcohols, polycarbonates, acrylic resins, polyurethanes, phenolic resins, urea resins, melamine resins, epoxy resins, fluoro-plastics, rayons, cuprammonium rayons, acetate resins, various kinds of elastomers, and naturally occurring and synthetic rubber materials.

7. The antimicrobial resin composition according to claim 5 or 6, wherein said zeolite is present with a content from 0,1 to 3% by mass.

8. A process for the preparation of an antimicrobial resin composition as set forth in any of claims 5 to 7 by incorporating the antimicrobial zeolite into the resin.

9. A process for the preparation of an antimicrobial resin composition as set forth in any of claims 5 to 7 by coating the surface of a resin film with the antimicrobial zeolite.

10. Use of an antimicrobial zeolite according to claim 1 or 2, for the prevention of a color change of an antimicrobial resin composition.

## Patentansprüche

1. Antimikrobieller Zeolith, umfassend Zeolith, wobei ein kaum lösliches Zinksalz mit einer Wasserlöshehkeit von 5 Gew.-% oder weniger bei 20°C in den darin vorliegenden feinen Poren gebildet wird.

2. Antimikrobieller Zeolith nach Anspruch 1, wobei das kaum lösliche Zinksalz, das in den feinen Poren gebildet wird, Zinkoxid, Zinkoxalat oder Zinkcitrat ist.

3. Antimikrobielle Zusammensetzung, umfassend den antimikrobiellen Zeolith nach Anspruch 1 oder 2 in einer Menge im Bereich von 0,05 bis 80 Massenprozent.

4. Antimikrobielle Zusammensetzung nach Anspruch 3, wobei eine antimikrobielle Harzzusammensetzung vorliegt.

5. Antimikrobielle Harzzusammensetzung, umfassend ein Harz und einen antimikrobiellen Zeolith wie beansprucht in einem der Ansprüche 1 oder 2.

6. Antimikrobielle Harzzusammensetzung nach Anspruch 5, wobei das Harz ausgewählt ist aus der Gruppe, bestehend aus thermoplastischen und hitzehärtbaren Harzen, wie etwa Polyethylenen. Polypropylenen, Vinylchloridharzen, ABS-Harzen, Polyestern, Polyvinylidenchloriden, Polyamiden, Polystyrolen, Polyacetalen, Polyvinylalkoholen, Polycarbonaten, Acrytharzen, Polyurethanen, Phenolharzen, Harnstoffharzen, Melaminharzen, Epoxidharzen, Fluorkunststoffen, Kunstseiden, Kupferseiden (Cupro), Acetatharzen, verschiedenen Arten vorn Elastomeren, und natürlich vorkommenden und synthetischen Gummimaterialien.

7. Antimikrobielle Harzzusammensetzung nach Anspruch 5 oder 6, wobei der Zeolith mit einem Gehalt von 0,1 bis 3 Massenprozent vorliegt.

8. Verfahren zur Herstellung einer antimikrobiellen Harzzusammensetzung nach einem der Ansprüche 5 bis 7 durch Einbauen des antimikrobiellen Zeoliths in das Harz.

9. Verfahren zur Herstellung einer antimikrobiellen Harzzusammensetzung nach einem der Ansprüche 5 bis 7, durch Beschichten der Oberfläche eines Harzfilms mit dem antimikrobiellen Zeolith.

10. Verwendung eines antimikrobieiien Zeoliths nach Anspruch 1 oder 2 zum Verhindern einer Farbveränderung bei einer antimikrobiellen Harzzusammensetzung.

## Revendications

1. Zéolithe antimicrobienne comprenant de la zéolithe dans laquelle un sel de zinc difficilement soluble, possédant une solubilité dans l'eau de 5 % en poids ou moins à 20 °C, est formé au sein des pores fins qui y sont présents,

2. Zéolithe antimicrobienne selon la revendication 1, dans laquelle le sel de zinc difficilement soluble formé au sein des pores fins est l'oxyde de zinc, l'oxalate de zinc ou le citrate de zinc.

3. Composition antimicrobienne comprenant la zéolithe antimicrobienne selon la revendication 1 ou 2, en une quantité qui se situe dans la plage de 0,05 à 80 % en masse.

4. Composition antimicrobienne selon la revendication 3, dans laquelle il s'agit d'une composition de résine antimicrobienne.

5. Composition de résine antimicrobienne comprenant une résine et une zéolithe antimicrobienne selon l'une quelconque des revendications 1 ou 2,

6. Composition de résine antimicrobienne selon la revendication 5, dans laquelle ladite résine est choisie parmi le groupe constitué par des résines thermoplastiques et thermodurcissables telles que des polyéthylènes, des polypropylènes, des résines de chlorure de vinyle, des résines ABS, des polyesters, des chlorures de polyvinylidène, des polyamides, des polystyrènes, des polyacétals, des alcools polyvinyliques, des polycarbonates, des résines acryliques, des polyuréthanes, des résines phénoliques, des résines d'urée, des résines de mélamine, des résines époxy, des composés fluoroplastiques, des rayonnes, des rayonnes de cuprammonium, des résines d'acétates, divers types d'élastomères et des matières de caoutchouc synthétique et existant naturellement.

7. Composition de résine antimicrobienne selon la revendication 5 ou 6, dans laquelle ladite zéolithe est présente avec une teneur de 0,1 à 3 % en masse.

8. Procédé pour la préparation d'une composition de résine antimicrobienne selon l'une quelconque des revendications 5 à 7, par incorporation de la zéolithe antimicrobienne dans la résine.

9. Procédé pour la préparation d'une composition de résine antimicrobienne selon l'une quelconque des revendications 5 à 7, par enduction de la surface d'un film de résine avec la zéolithe antimicrobienne.

10. Utilisation d'une zéolithe antimicrobienne selon la revendication 1 ou 2, pour la prévention d'un changement de couleur d'une composition de résine antimicrobienne.
